# EUROPÄISCHE PATENTSCHRIFT

(11) **EP 0 602 519 B1**
(45) Veröffentlichungstag und Bekanntmachung des Hinweises auf die Patenterteilung: **15.01.1997**
(21) Anmeldenummer: 93119760.2
(22) Anmeldetag: 08.12.1993
(51) Int. Cl.: F16K 3/24, F16J 15/20

(54) **Absperrventil und Dichtungsring**
Stop valve and sealing ring
Soupape d'arrêt et anneau d'étanchéité

(30) Priorität: 12.12.1992 DE 4241963; 28.08.1993 DE 9312956 U
(43) Veröffentlichungstag der Anmeldung: 22.06.1994
(73) Patentinhaber: Klinger AG, CH-6304 Zug (CH)
(72) Erfinder: Nendzig, Gerhard, A-2531 Gaaden (AT); Taus, Alfred, A-2353 Guntramsdorf (AT)
(74) Vertreter: Sparing - Röhl - Henseler Patentanwälte

(56) Entgegenhaltungen:
- DE-A- 3 631 447
- DE-B- 1 775 691
- GB-A- 272 649
- US-A- 1 550 322
- US-A- 1 992 967

## Beschreibung

Die Erfindung betrifft ein Absperrventil mit einem einen Strömungskanal bildenden Gehäuse und einem relativ zu dem Gehäuse axial verschiebbaren Sperrglied, das unter Zwischenschaltung eines ersten Dichtungsrings eine Gehäusebohrung im Strömungskanal absperrt, wobei der erste Dichtungsring aus radial verlaufenden Weichstofflamellen und dazwischen angeordneten Metallamellen besteht und der Weichstoff inhomogen aufgebaut ist, während die Gehäusebohrung unter Zwischenschaltung einer wenigstens einen zweiten Dichtungsring aufweisenden Stopfbuchsdichtung nach außen abgedichtet ist, sowie einen Dichtungsring, der radial verlaufende Weichstofflamellen und dazwischen mit den Weichstofflamellen verbundene Metallamellen aufweist, wobei der Weichstoff inhomogen aufgebaut ist. Ein derartiges Absperrventil und ein derartiger Dichtungsring gehören zum allgemein bekannten Stand der Technik.

Als Weichstoff kommt für Dichtungsringe derartiger Absperrventile beispielsweise IT-Material (Gummi-Asbest-Material) oder Blähgraphit infrage. Der Weichstoff ist dadurch inhomogen, daß er aus Teilchen mit dazwischen gelagerten Hohlräumen besteht. Diese Hohlräume erweisen sich dann als nachteilig, wenn beim Betrieb des offenen Ventils der Betriebsdruck plötzlich absinkt. Dies ist insbesondere bei Dampfbetrieb problematisch, wenn die Hohlräume mit Wasser gefüllt sind, das bei plötzlichem Druckabfall im Ventil schlagartig in Dampf übergeht. Bei einer solchen schlagartigen Volumenvergrößerung des Mediums in den Hohlräumen wird der Dichtungsring durch in Richtung der beströmten Mantelfläche des Dichtungsringes vordringende explosionsartige Mediumstöße zerstört, welche Teile seiner Dichtlamellen verschieben. Dies ist insbesondere bei Kondensatableitern vorgeschalteten Ventilen bekannt und gefürchtet. Auch die seit langem bekannte Armierung mit zwischen den Weichstofflamellen angeordneten Metallamellen ändert nichts an dieser Situation.

Aufgabe der Erfindung ist es, ein Absperrventil der eingangs genannten Art zu schaffen, bei dem ein Betriebsdruckabfall in vielen Betriebsfällen nicht zu Zerstörungen des Dichtungsrings führt.

Diese Aufgabe wird dadurch gelöst, daß die Metallamellen mindestens im Bereich um die mit dem Sperrglied zusammenwirkende, beströmte Mantelfläche des Dichtungsringes axiale Verformungen aufweisen, die infolge ihrer formschlüssigen Verbindung mit den benachbarten Weichstofflamellen deren radial frei verlaufende Gleitschichten auf maximal ein Drittel der Lamellendicke begrenzen.

Auf diese Weise ist sicher verhindert, daß Teile der Weichstofflamellen entlang der Metallamellen gegen die beströmte Mantelfläche gleiten und aus ihr herausfallen, wodurch der Ring zerstört würde. Die maximal eine Dicke von einem Drittel der Weichstofflamellendicke aufweisenden Weichstoff-Gleitschichten können durch die innere Reibung zu den benachbarten, am Gleiten behinderten Schichten des Weichstoffes in vielen Betriebsfällen festgehalten werden. Vorzugsweise sind die axialen Verformungen jedoch so ausgebildet, daß keine radial frei verlaufenden Gleitschichten in dem Dichtungsring möglich sind. Dazu können zweckmäßig krallenartige Vorsprünge gebildet werden, indem die Metallamellen vor Verbindung mit den Weichstofflamellen mit geeigneten Werkzeugen lokal durchstoßen werden und dabei die entsprechenden Blechlamellen die Krallen bilden, deren Höhe mindestens der Dicke der Weichstofflamellen entspricht.

Es ist aber auch möglich, ohne Durchstoßung der Metallamellen eine Reduzierung der möglichen radialen Gleitschichten zu erzielen, wenn die Metallamellen nahe der beströmten Mantelfläche vorzugsweise konzentrisch und über den ganzen Umfang verlaufend eine stufenartige Sicke aufweisen, deren Stufenhöhe mindestens zwei Drittel der Dicke der anliegenden Weichstofflamellen beträgt. Dabei bilden die Sicken die axialen Verformungen, welche die Dicke der Gleitschichten wesentlich verkleinern und so die Funktion des Ventils auch bei den oben geschilderten Betriebsfällen sichern.

Der zweite Dichtungsring besteht vorzugsweise aus mehreren, durch zwischenliegende, ringförmige Metallamellen voneinander getrennten, ringförmigen Blähgraphitlamellen und zwei PTFE-Ringen, wobei die PTFE-Ringe an den beiden Stirnflächen des Dichtungsrings angeordnet und mit einer Abstreifkante zur Anlage an dem Sperrglied versehen sind. Durch die Abstreifkante wird eine gute Abstreifwirkung vor allem im Hinblick auf kleine und sehr kleine Graphitpartikel erzielt, während die Metallamellen mit ihren innenseitigen Ringkanten in bezug auf gröbere Graphitpartikel abstreifend gegenüber dem sich bewegenden Teil wirken. Hierbei können die Abstreifkanten an einer Abstreiflippe ausgebildet sein. Ferner können die PTFE-Ringe angeklebt sein. Die Metallamellen können in den benachbarten Blähgraphitlamellen und gegebenenfalls den PTFE-Ringen, beispielsweise wie vorstehend im Zusammenhang mit dem ersten Dichtungsring beschrieben, verankert sein.

Die Dichtungsringe können auch einen zusammengepreßten Stapel von ausgestanzten Ringen umfassen, die jeweils aus einer Metallamelle mit nach beiden Blechseiten verlaufenden, krallenartigen Vorsprüngen und einer mit der Metallamelle an einer Seite verankerten Weichstofflamelle bestehen. Diese Dichtungsringe werden dann in der Weise hergestellt, daß aus einer Metallamelle mit nach beiden Seiten verlaufenden krallenartigen Vorsprüngen unter Auflage einer Weichstofflamelle Ringe ausgestanzt werden, die dann zu einem Stapel übereinander angeordnet zu einem zusammenhaltenden Dichtungsring, bei dem die noch freien krallenartigen Vorsprünge an den Unterseiten der Ringe in die darunter befindliche Weichstofflamelle des darunter befindlichen Rings eindringen, verpreßt werden. Ein Verkleben der einzelnen Ringe miteinander erübrigt sich dann.

Die Erfindung wird nachstehend anhand von in den beigefügten Abbildungen dargestellten Ausführungsbeispielen näher erläutert.

Fig. 1 stellt im Axialschnitt ein Absperrventil dar.

Fig. 2 und 3 zeigen im Axialschnitt zwei bevorzugte Ausführungsformen eines Dichtungsrings für das Absperrventil von Fig. 1.

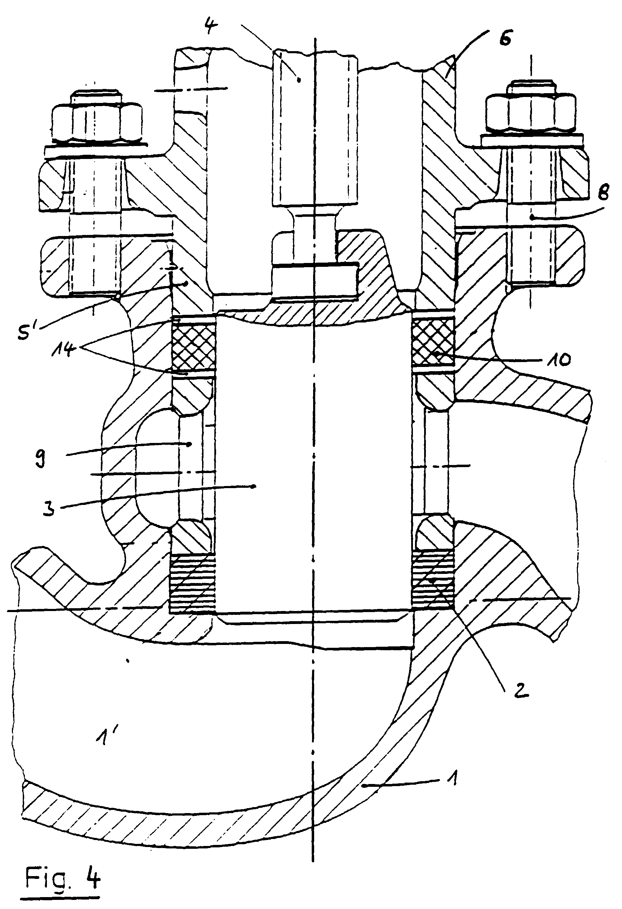

Fig. 4 zeigt einen Ausschnitt von Fig. 1.

Fig. 5 und 6 zeigen im Axialschnitt zwei bevorzugte Ausführungsformen eines Stopfbuchsdichtungsrings für das Absperrventil von Fig. 1 bzw. 4.

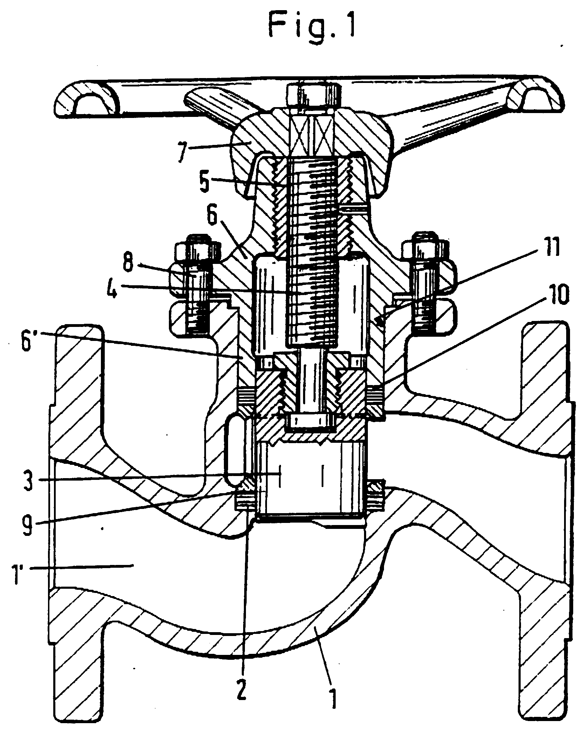

Das in Fig. 1 dargestellte Absperrventil weist ein Gehäuse 1 mit einem Strömungskanal 1' auf, der von einem Dichtungsring 2 umschlossen ist. Der Strömungskanal 1' ist in der dargestellten Schließstellung mittels eines eingeschobenen Kolbens 3 abgeschlossen, der über eine drehbar damit verbundene Spindel 4 axial in die Offenstellung verschiebbar ist. Die Spindel 4 ist mittels eines Gewindestückes 5 eines Oberteils 6 über ein Betätigungsorgan in Form eines Handrades 7 axial verstellbar. Das Oberteil 6 ist mittels Stiftschrauben 8 am Gehäuse 1 fest verschraubt, wobei ein rohrförmiger Fortsatz 6' des Oberteils 6 in eine Bohrung 11 des Gehäuses 1 reicht, welche auch den Dichtungsring 2 aufnimmt, sowie ein käfigartiges Distanzstück 9 und einen ringförmigen Dichtungsring 10 zur Abdichtung nach außen aufweist.

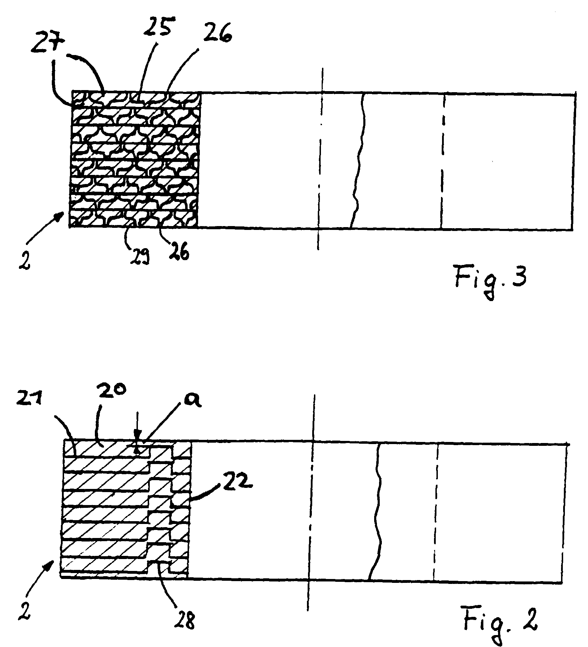

Der in Fig. 2 vergrößert dargestellte Dichtungsring 2 ist aus Weichstofflamellen 20, vorzugsweise aus Blähgraphit, mit dazwischen angeordneten Metallamellen 21 aufgebaut. Axiale Verformungen sind an den Metallamellen 21 durch jeweils eine konzentrisch nahe der beströmten Mantelfläche 22 des Dichtungsrings 2 angeordnete Sicke 28 ausgebildet, welche die Dicke a der frei verlaufenden Gleitschichten wunschgemäß auf maximal ein Drittel der Dicke der Weichstofflamellen 20 begrenzt. Die Herstellung erfolgt durch Prägen der beidseits mit einer Weichstofflamelle 20 versehenen Metallage vor Zusammensetzung zu einem Dichtungsring 2.

Der in Fig. 3 dargestellte Dichtungsring 2 für ein Ventil nach Fig. 1 weist Metallamellen 25 mit regelmäßig angeordneten Durchbrüchen 26 auf, wobei die so entstandenen Metallspitzen die gesamte Dicke der beidseits angeordneten Weichstofflamellen 27 durchdringen.

Zur Herstellung eines solchen Dichtungsringes wird von einer Blechbahn ausgegangen, die bereits regelmäßig angeordnet Durchbrüche 26 aufweist, wodurch nach beiden Blechseiten verlaufende krallenartige Vorsprünge 29 entstanden sind. Auf diese Blechbahn wird beidseits eine Bahn aus Blähgraphit mit einer Dichte von 1 g/cm³ aufgewalzt, wobei sich die Dichte auf 1,3 g/cm³ vergrößert. Dabei durchdringen die krallenartigen Vorsprünge 29 den Blähgraphit zur Gänze, so daß nach Verstanzen dieser Mehrschichtplatte ein Dichtungsring entsteht, bei dem sich keine radial verlaufenden Gleitschichten bilden können und dementsprechend eine Zerstörung des Dichtungsrings auch bei schweren Beanspruchungen der eingangs geschilderten Art ausgeschlossen ist.

Die Herstellung kann aber auch gemäß der oben beschriebenen Methode aus Ringen aus einseitig mit einer Blähgraphitlamelle 27 beschichteten Metallamellen 25 erfolgen.

Bei der Endmontage treten dann bei der endgültigen Verdichtung auf > 1,6 g/cm³ die Krallen auch noch in die benachbarten Weichstofflamellen 27 ein, so daß ein besonders inniger Verband entsteht.

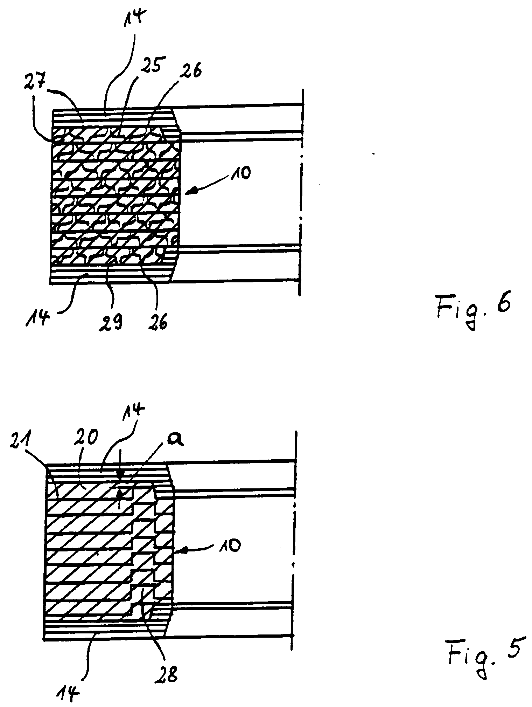

Die Stopfbuchsdichtung umfaßt gemäß Fig. 5 einen Weichstoffpackungsring, der aus Blähgraphitlamellen 20 mit dazwischen angeordneten Metallamellen 21 aufgebaut ist. Axiale Verformungen sind an den Metalllamellen 21 durch jeweils eine konzentrisch nahe dem Kolben 3 angeordnete Sicke 28 ausgebildet, welche die Dicke a der frei verlaufenden Gleitschichten auf maximal ein Drittel der Dicke der Blähgraphitlamellen 20 begrenzt. Die Herstellung kann wie bei dem Dichtungsring 2 erfolgen.

An der oberen und unteren Stirnseite des Packungsrings 10 ist ein Ring 14 aus gegebenenfalls gefülltem Polytetrafluorethylen vorgesehen, der einen undurchlässigen Abdeckring sowie ein ringförmiges Abstreifelement bildet, wobei das lippenförmige Abstreifelement des PTFE-Rings 14 am Kolben 3 anliegt. Die Dicke jedes der beiden PTFE-Ringe 14 liegt bei etwa 1 bis 2 mm, während die Stärke des Packungsrings 10 ein Mehrfaches hiervon beträgt.

Gemäß Fig. 6 sind die Metallamellen 25 des beidseitig einen Ring 14 aufweisenden Packungsrings 10 mit regelmäßig angeordneten Durchbrüchen 26 versehen, wobei die so entstandenen Metallspitzen die gesamte Dicke der beidseits angeordneten Weichstofflamellen 27 durchdringen. Die Herstellung eines derartigen Packungsrings 10 kann entsprechend dem in Fig. 3 dargestellten Dichtungsring 2 (auch hier treten bei der Endmontage bei der endgültigen Verdichtung auf > 1,6 g/cm³ die Krallen auch noch in die benachbarten Weichstofflamellen 27 ein, so daß ein besonders inniger Verband entsteht) oder auch gemäß der oben beschriebenen Methode aus Ringen aus einseitig mit einer Blähgraphitlamelle 27 beschichteten Metallamellen 25 erfolgen.

## Patentansprüche

1. Absperrventil mit einem einen Strömungskanal (1') bildenden Gehäuse (1) und einem relativ zu dem Gehäuse (1) axial verschiebbaren Sperrglied (3), das unter Zwischenschaltung eines ersten Dichtungsrings (2) eine Gehäusebohrung (11) im Strömungskanal (1') absperrt, wobei der erste Dichtungsring (2) aus radial verlaufenden Weichstofflamellen (20, 27) und dazwischen angeordneten Metallamellen (21, 25) besteht und der Weichstoff inhomogen aufgebaut ist, während die Gehäusebohrung (11) unter Zwischenschaltung einer wenigstens einen zweiten Dichtungsring (10) aufweisenden Stopfbuchsdichtung nach außen abgedichtet ist, dadurch **gekennzeichnet**, daß die Metallamellen (21, 25) mindestens im Bereich um die mit dem Sperrglied (3) zusammenwirkende beströmte Mantelfläche (22) des ersten Dichtungsringes (2) axiale Verformungen aufweisen, die infolge ihrer formschlüssigen Verbindung mit den benachbarten Weichstofflamellen (20, 27) deren radial frei verlaufende Gleitschichten auf maximal ein Drittel der Lamellendicke begrenzen.

2. Absperrventil nach Anspruch 1, dadurch gekennzeichnet, daß jede der Metallamellen (25) nach beiden Blechseiten verlaufende, regelmäßig verteilte, krallenartige Vorsprünge (29) aufweist, welche die benachbarten Weichstofflamellen (27) mindestens zu zwei Drittel, vorzugsweise jedoch zur Gänze ihrer Dicke durchdringen.

3. Absperrventil nach Anspruch 1, dadurch gekennzeichnet, daß jede der Metallamellen (21) nahe der beströmten Mantelfläche (22) vorzugsweise konzentrisch und über den ganzen Umfang verlaufend eine stufenartige Sicke (28) aufweist, deren Höhe mindestens zwei Drittel der Dicke der anliegenden Weichstofflamellen (20) beträgt.

4. Absperrventil nach einem der Ansprüche 1 bis 3, dadurch gekennzeichnet, daß der zweite Dichtungsring (10) aus mehreren, durch zwischenliegende, ringförmige Metallamellen (21, 25) voneinander getrennten, ringförmigen Blähgraphitlamellen (20, 27) und zwei PTFE-Ringen (14) besteht, wobei die PTFE-Ringe (14) an den beiden Stirnflächen des Dichtungsrings (10) angeordnet und mit einer Abstreifkante zur Anlage an dem Sperrglied (3) versehen sind.

5. Absperrventil nach Anspruch 4, dadurch gekennzeichnet, daß die Abstreifkanten an einer Abstreiflippe ausgebildet sind.

6. Absperrventil nach Anspruch 4 oder 5, dadurch gekennzeichnet, daß die PTFE-Ringe (14) angeklebt sind.

7. Absperrventil nach einem der Ansprüche 4 bis 6, dadurch gekennzeichnet, daß die Metallamellen (21, 25) in den benachbarten Blähgraphitlamellen (20, 27) und gegebenenfalls den PTFE-Ringen (14) verankert sind.

8. Dichtungsring, der radial verlaufende Weichstofflamellen (27) und dazwischen mit den Weichstofflamellen (27) verbundene Metallamellen (25) aufweist, wobei der Weichstoff inhomogen aufgebaut ist, dadurch gekennzeichnet, daß jede der Metallamellen (25) nach beiden Blechseiten verlaufende, regelmäßig verteilte, krallenartige Vorsprünge (29) aufweist, welche die benachbarten Weichstofflamellen (27) mindestens zu zwei Drittel, vorzugsweise jedoch zur Gänze ihrer Dicke durchdringen.

9. Dichtungsring, der radial verlaufende Weichstofflamellen (20) und dazwischen mit den Weichstofflamellen (20) verbundene Metallamellen (21) aufweist, wobei der Weichstoff inhomogen aufgebaut ist, dadurch gekennzeichnet, daß jede der Metallamellen (21) nahe der zu beströmenden Mantelfläche (22) des Ringes vorzugsweise konzentrisch und über den ganzen Umfang verlaufend eine stufenartige Sicke (28) aufweist, deren Höhe mindestens zwei Drittel der Dicke der anliegenden Weichstofflamellen (20) beträgt.

10. Dichtungsring aus mehreren, durch zwischenliegende, ringförmige Metallamellen (21, 25) voneinander getrennten, ringförmigen Blähgraphitlamellen (20, 27), nach Anspruch 8 oder 9, dadurch gekennzeichnet, daß ein PTFE-Ring (14) an einer Stirnfläche und ein weiterer PTFE-Ring (14) an der weiteren Stirnfläche des Dichtungsrings angeordnet sind, wobei beide PTFE-Ringe (14) mit einer Abstreifkante zur Anlage an einem gegenüber dem Dichtungsring beweglichen Teil (3) versehen sind.

11. Dichtungsring nach Anspruch 10, dadurch gekennzeichnet, daß die Abstreifkante an einer Abstreiflippe ausgebildet ist.

12. Dichtungsring nach Anspruch 10, dadurch gekennzeichnet, daß die PTFE-Ringe (14) angeklebt sind.

13. Dichtungsring nach einem der Ansprüche 8 bis 12, dadurch gekennzeichnet, daß er einen zusammengepreßten Stapel von ausgestanzten Ringen umfaßt, die jeweils aus einer Metallamelle (25) mit nach beiden Blechseiten verlaufenden, krallenartigen Vorsprüngen (29) und einer mit der Metallamelle (25) an einer Seite verankerten Weichstofflamelle (27) bestehen.

## Claims

1. Shut-off valve with a housing (1) forming a flow channel (1') and a blocking member (3) axially displaceable relative to the housing (1), which with the interposition of a first gasket (2) closes a housing bore (11) in the flow channel (1'), the first gasket (2) consisting of radially extending soft material discs (20, 27) and metal discs (21, 25) located therebetween and the soft material having a non-homogeneous construction, whereas the housing bore (11) is sealed with respect to the outside with the interposition of a stuffing-box packing comprising at least one second gasket (10), characterized in that at least in the region around the surface (22) of the first gasket (2), which surface cooperates with the blocking member (3) and along which flow takes place, the metal discs (21, 25) comprise axial deformations, which as a result of their form-locking connection to the adjacent soft material discs (20, 27), restrict their radially freely extending sliding layers to a maximum of one third of the thickness of the discs.

2. Shut-off valve according to Claim 1, characterized in that each of the metal discs (25) comprises claw-like projections (29) extending towards both sides of the sheet and distributed uniformly, which projections penetrate the adjacent soft material discs (27) at least up to two thirds of, but preferably up to their entire thickness.

3. Shut-off valve according to Claim 1, characterized in that close to the surface (22) along which flow takes place, each of the metal discs (21) comprises a step-like corrugation (28) extending preferably concentrically and over the entire periphery, the height of which corrugation amounts to at least two thirds of the thickness of the adjoining soft material discs (20).

4. Shut-off valve according to one of Claims 1 to 3, characterized in that the second gasket (10) consists of a plurality of annular expandable graphite discs (20, 27) separated from each other by intermediate, annular metal discs (21, 25) and of two PTFE-rings (14), the PTFE-rings (14) being located on the two end faces of the gasket (10) and being provided with a stripping edge for abutment against the blocking member (3).

5. Shut-off valve according to Claim 4, characterized in that the stripping edges are constructed on a stripping lip.

6. Shut-off valve according to Claim 4 or 5, characterized in that the PTFE-rings (14) are stuck on.

7. Shut-off valve according to one of Claims 4 to 6, characterized in that the metal discs (21, 25) are anchored in the adjacent expandable graphite discs (20, 27) and possibly the PTFE-rings (14).

8. Gasket, which comprises radially extending soft material discs (27) and therebetween metal discs (25) connected to the soft material discs (27), the soft material having a non-homogeneous construction, characterized in that each of the metal discs (25) comprises claw-like projections (29) extending towards both sides of the sheet and uniformly distributed, which penetrate the adjacent soft material discs (27) at least up to two thirds of, but preferably up to their entire thickness.

9. Gasket, which comprises radially extending soft material discs (20) and therebetween metal discs (21) connected to the soft material discs (20), the soft material having a non-homogeneous construction, characterized in that close to the surface (22) of the ring, along which flow takes place, each of the metal discs (21) comprises a step-like corrugation (28) extending preferably concentrically and over the entire periphery, the height of which corrugation amounts to at least two thirds of the thickness of the adjacent soft material discs (20).

10. Gasket consisting of a plurality of annular expandable graphite discs (20, 27), separated from each other by intermediate, annular metal discs (21, 25), according to Claim 8 or 9, characterized in that a PTFE-ring (14) is located on one end face and a further PTFE-ring (14) is located on the other end face of the gasket, both PTFE-rings (14) being provided with a stripping edge for bearing against a part (3) which is able to move with respect to the gasket.

11. Gasket according to Claim 10, characterized in that the stripping edge is constructed on a stripping lip.

12. Gasket according to Claim 10, characterized in that the PTFE-rings (14) are stuck on.

13. Gasket according to one of Claims 8 to 12, characterized in that it comprises a compressed stack of stamped rings, which each consist of a metal disc (25) with claw-like projections (29) extending towards both sides of the sheet and a soft material disc (27) anchored to the metal disc (25) on one side.

## Revendications

1. Robinet d'arrêt comprenant un corps (1) définissant un canal de passage d'écoulement (1') et un organe d'obturation (3) mobile axialement par rapport au corps (1), ledit organe obturant, avec interposition d'une première bague d'étanchéité (2), un alésage (11) ménagé dans le canal de passage (1'), dans lequel la première bague d'étanchéité (2) est constituée de lamelles en matériau compressible (20, 27) s'étendant radialement et entre lesquelles sont intercalées des lamelles métalliques (21, 25) et le matériau compressible est non-homogène, tandis que l'alésage (11) est rendu étanche vis à vis de l'extérieur par interposition d'un presse-étoupe comportant au moins une seconde bague d'étanchéité (10), caractérisé en ce que les lamelles métalliques (21, 25) présentent des déformations axiales au moins au voisinage de la face interne (22), soumise à l'écoulement et coopérant avec l'organe d'obturation (3), de la première bague d'étanchéité (2), lesquelles déformations, du fait de leur liaison mécanique avec les lamelles de matériau compressible (20, 27) adjacentes, limitent leurs sections de glissement libres radialement à un maximum d'un tiers de l'épaisseur des lamelles.

2. Robinet d'arrêt selon la revendication 1, caractérisé en ce que chacune des lamelles métalliques (25) comporte des saillies (29) en forme de griffes régulièrement réparties sur ses deux faces, lesquelles saillies pénêtrent les lamelles de matériau compressible voisines (27) au moins sur deux tiers de leur épaisseur, de préférence cependant sur l'intégralité de leur épaisseur.

3. Robinet d'arrêt selon la revendication 1, caractérisé en ce que chacune des lamelles métalliques (21) comporte, au voisinage de la face interne soumise à l'écoulement (22), un ressaut en forme de marche (28) s'étendant de préférence de manière concentrique et sur tout le pourtour, dont la hauteur est au moins les deux tiers de l'épaisseur des lamelles de matériau compressible environnantes (20).

4. Robinet d'arrêt selon l'une des revendications 1 à 3, caractérisé en ce que la seconde bague d'étanchéité (10) est constituée de deux bagues de PTFE (14) et de plusieurs lamelles de graphite expansible de forme annulaire (20, 27), ces dernières étant séparées les unes des autres par des lamelles métalliques intercalaires de forme annulaire (21, 25), les bagues de PTFE (14) étant disposées sur les deux faces frontales de la bague d'étanchéité (10) et munies d'une arête de raclage en contact avec l'organe d'obturation (3).

5. Robinet d'arrêt selon la revendication 4, caractérisé en ce que les arêtes de raclage sont formées sur une lèvre de raclage.

6. Robinet d'arrêt selon la revendication 4 ou 5, caractérisé en ce que les bagues de PTFE (14) sont collées.

7. Robinet d'arrêt selon l'une des revendications 4 à 6, caractérisé en ce que les lamelles métalliques (21, 25) sont accrochées dans les lamelles de graphite expansible adjacentes (20, 27) et éventuellement dans les bagues de PTFE (14).

8. Bague d'étanchéité comportant des lamelles de matériau compressible (27) s'étendant radialement, entre lesquelles sont intercalées des lamelles métalliques (25) fixées aux lamelles de matériau compressible (27), dans laquelle le matériau compressible est non-homogène, caractérisée en ce que chacune des lamelles métalliques (25) comporte des saillies (29) en forme de griffes régulièrement réparties sur ses deux faces, lesquelles saillies pénètrent dans les lamelles de matériau compressible adjacentes (27) au moins sur les deux tiers de leur épaisseur, de préférence cependant sur l'intégralité de leur épaisseur.

9. Bague d'étanchéité comportant des lamelles de matériau compressible (20) s'étendant radialement, entre lesquelles sont intercalées des lamelles métalliques (21) fixées aux lamelles de matériau compressible (20), dans laquelle le matériau compressible est non-homogène, caractérisée en ce que chacune des lamelles métalliques (21) comporte, au voisinage de la face interne soumise à l'écoulement (22) de la bague, un ressaut en forme de marche (28) s'étendant de préférence de manière concentrique et sur tout le pourtour, dont la hauteur est au moins les deux tiers de l'épaisseur des lamelles de matériau compressible environnantes (20).

10. Bague d'étanchéité comprenant une pluralité de lamelles de graphite expansible de forme annulaire (20, 27) séparées les unes des autres par des lamelles métalliques intercalaires de forme annulaire (21, 25) selon la revendication 8 ou 9, caractérisée en ce qu'une bague de PTFE (14) est disposée sur une face frontale et une autre bague de PTFE (14) est disposée sur l'autre face frontale de la bague d'étanchéité, dans laquelle les deux bagues de PTFE (14) sont munies d'une arête de raclage en contact avec la partie mobile par rapport à la bague d'étanchéité.

11. Bague d'étanchéité selon la revendication 10, caractérisée en ce que l'arête de raclage est formée sur une lèvre de raclage.

12. Bague d'étanchéité selon la revendication 10, caractérisée en ce que les bagues de PTFE sont collées.

13. Bague d'étanchéité selon l'une des revendications 8 à 12, caractérisée en ce qu'elle comporte un empilement comprimé ensemble de bagues matricées, lesquelles consistent respectivement en une lamelle métallique (25) munie de saillies en forme de griffes (29) s'étendant sur ses deux faces et en une lamelle de matériau compressible (27) accrochée sur une face de la lamelle métallique (25).
